(19) **Europäisches Patentamt**

**European Patent Office**

**Office européen des brevets**

(11) Veröffentlichungsnummer: **0 017 889**
**A1**

(12) # EUROPÄISCHE PATENTANMELDUNG

(21) Anmeldenummer: **80101852.4**

(22) Anmeldetag: **08.04.80**

(51) Int. Cl.³: **C 09 D 11/16, C 09 D 13/00**

(30) Priorität: **12.04.79 AT 2724/79**
**31.03.80 AT 1741/80**

(43) Veröffentlichungstag der Anmeldung: **29.10.80**
**Patentblatt 80/22**

(84) Benannte Vertragsstaaten: **CH DE FR GB IT LI**

(71) Anmelder: **Kores Holding Zug AG, Baarer Strasse 57,**
**CH-6300 Zug (CH)**

(72) Erfinder: **Witz, Ilona, Wagnerstrasse 29/5,**
**A-2371 Hinterbrühl (AT)**

(74) Vertreter: **Gibler, Ferdinand, Dr. et al, Singerstrasse 8,**
**A-1010 Wien (AT)**

(54) **Schreibstift.**

(57) Schreibstift auf Basis einer chemischen Farbreaktion zwischen einem Farbstoffvorprodukt und einer sauren Verbindung, die den Farbstoffakzeptor bildet, dadurch gekennzeichnet, daß der Schreibstift eine der Reaktionskomponenten in einer Trägersubstanz enthält, gegebenenfalls in Kombination mit üblichen Zusätzen.

- 1 -

## Schreibstift

Die vorliegende Erfindung betrifft einen Schreibstift auf Basis einer chemischen Farbreaktion zwischen einem Farbstoffvorprodukt und einer sauren Verbindung, die den Farbstoffakzeptor bildet.

Seit urdenklicher Zeit gibt es Stifte zum Bemalen und Beschriften, die aus einer stark farbabgebenden Substanz bestehen, denkt man an die ersten eisenoxidhältigen Steine oder diverse stark pigmentierte Griffel. Die später entwickelten Tinten oder flüssigen Farben bestehen ebenfalls aus sehr starken pigmentierten Lösungen oder Dispersionen.

Diese stark pigmentierten Farbsysteme, sei es in fester oder flüssiger Form, haben den Nachteil, daß es sich selbst bei fachgemäßem Umgang mit solchen Beschriftungsmittel nie vermeiden läßt, daß Farbe an unerwünschten Stellen abgegeben wird.

So wichtig pädagogisch für Kinder das Malen und Zeichnen ist, so bringt es für die Eltern das Problem, daß Farben verschmiert werden und oft schwierig zu entfernen sind.

Es gibt eine Reihe von Pigmenten, die sich trotz Behandlung mit starken Lösungsmitteln nicht mehr entfernen lassen.

Auch das nachträgliche Bleichen der verschmutzten Stelle ist eher problematisch und läßt sich nur sehr selten anwenden.

- 2 -

Es besteht schon lange das Problem, anstelle von mit einer farbabgebenden Substanz ausgestatteten Schreibstiften, ein System zu schaffen, bei dem die Farbe nur an der gewünschten Stelle entwickelt wird.

Man hat zwar vor längerer Zeit schon ein Aufzeichnungssystem nach Art des Kohlepapiers entwickelt, das auf einer chemischen Farbreaktion zwischen einem Farbstoffvorprodukt und einer sauren Verbindung, einem Farbstoffakzeptor, basiert.

Derartige Aufzeichnungssysteme bestehen zumeist aus einem sogenannten Ober-, Mittel- und Unterblatt, wobei auf die Unterseite des Oberblattes eine das Farbstoffvorprodukt enthaltende Lösung in Mikrokapseln aufgebracht ist. Die Oberseite des Unterblattes trägt eine Beschichtungsmasse, die eine saure Verbindung, den Farbstoffakzeptor, enthält. Das Titelblatt trägt beide Komponenten jeweils auf der Ober- bzw. Unterseite. Durch Anwendung von Druck beim Beschriften wird die Lösung des Farbstoffvorproduktes von der die saure Verbindung enthaltenden Schicht adsorbiert, wodurch die Farbreaktion ausgelöst wird und das Farbstoffvorprodukt sich zu einer intensiv gefärbten Modifikation umlagert.

Die im Handel befindlichen Aufzeichnungssysteme sind zumeist sogenannte Zweiblattsysteme. Auch sogenannte Einblattsysteme hat man bereits versucht herzustellen, bei dem beide Reaktionskomponenten, voneinander isoliert, auf einen einzigen Träger aufgebracht werden. Allerdings schafft dieses System Probleme, da die Isolierung der Reaktionskomponenten bei lang andauernder Lagerung sehr schwierig zu gewährleisten ist.

Beim Beschriften des Ein- oder Zweiblattsystems wird Druck ausgeübt, sodaß die Isolierung, die in letzter Zeit durch Mikroverkapselung erfolgt, bricht bzw. beseitigt wird und es kommt zu der gewünschten Farbreaktion.

Je nach Farbstoffvorprodukt kann man eine ganze Palette von Schriftfarben nach diesem Prinzip erhalten.

Auch durch die Variation der sauren Komponente läßt sich die Vielzahl der Aufzeichnungssysteme noch vergrößern. Als saure Komponenten kann man entweder saure Tone oder Phenolformaldehydharze, organische Carbonsäuren und eine Reihe anderer saurer Verbindungen verwenden.

Es gibt viele Varianten dieses Typs von Aufzeichnungsmaterialien, so wurde insbesondere in letzter Zeit ein System entwickelt, das besonders dauerhafte Kopien ergibt, da durch die Verwendung eines Metallchlorides, insbesondere Zinkchlorid, als saure Verbindung bzw. Lewis'scher Säure auf die Anwesenheit eines Lösungsmittels verzichtet werden kann und die Farbstoffumlagerung durch den Kontakt der beiden Reaktionskomponenten in festem Zustand ausgeführt wird.

Man hat früher bereits versucht, Malstifte auf dem Prinzip dieser chemischen Farbreaktion herzustellen, wobei man ein Farbstoffvorprodukt, gelöst in einem nichtflüssigen, öligen Lösungsmittel in eine Trägersubstanz aus einer Mischung eines Wachses mit einem höheren Fettsäureester eingebettet hat. Als Aufnahmeblatt dient ein herkömmliches Unterblatt, d.h. ein Träger mit der die Lewis'scher Säure enthaltenden Beschichtungsmasse. Beim Beschriften wird das gelöste Farbstoffvorprodukt von der sauren Schicht adsorbiert und zu der gefärbten Modifikation umgelagert.

Dieses Mal- bzw. Zeichensystem zeigt den Nachteil, daß das Farbstoffvorprodukt gemeinsam mit einem nichtflüchtigen Öl auf die Akzeptormasse übertragen wird. Dadurch werden Schriften nicht mit der gewünschten Dauerhaftigkeit und Farbfestigkeit erhalten. Zum Anderen ist das System nur beschränkt anwendbar, da die Umkehr, die saure Verbindung in den Malstift einzuarbeiten, gescheitert ist.

Vor langer Zeit hat man versucht, sogenannten Geheimtinten, die darauf beruhen, daß durch Anwendung von Wärme anorganische Salze in eine andere, anders gefärbte Kristallmodifikation umgelagert werden, herzustellen.

Die vorliegende Erfindung versucht nun ein breit anwendbares Schreibsystem auf Basis einer chemischen Farbreaktion zu schaffen, beidem entweder das Farbstoffvorprodukt bzw. die saure Verbindung in bestimmten Lösungsmitteln gelöst wird oder der Farbstoffakzeptor in einem festen Bindemittel bzw. Wachs als Trägersubstanz eingebettet ist.

Erfindungsgemäß enthält der Schreibstift eine der Reaktionskomponenten in einer Trägersubstanz, gegebenenfalls in Kombination mit üblichen Zusätzen.

Eine der Reaktionskomponenten kann eine saure Verbindung sein, die als Farbstoffakzeptor dient. Dafür eignen sich insbesondere saure Tone, Phenolharze, Phenolformaldehydharze, Chloride eines Metalles mit der Atommasse von 50 bis 66 oder eine organische Säure. In diesem Fall wird das Aufnahmeblatt mit dem Farbstoff vorprodukt beschichtet.

Nach einer anderen Ausführungsform enthält der Schreibstift als Reaktionskomponente das Farbstoffvorprodukt, das aus der Gruppe Kristallviolettlakton, Malachitgrünlakton, Benzoylleukomethylenblau, Rhodamin-ß-Laktam, Leukoauramin, Spyropyrane, Fluorane und Anthrachinonderivate ausgewählt sein kann.

In ersterem Fall kann die Trägersubstanz aus einem Bindemittel bestehen, das in eine Gerüstsubstanz eingebettet ist oder die Trägersubstanz ist ein Wachs. Die saure Komponente läßt sich jedoch auch in einem Lösungsmittel lösen und als Schreibflüssigkeit verwenden.

Als Lösungsmittel, insbesondere wenn der Schreibstift als Reaktionskomponente das Farbstoffvorprodukt enthält, eignen sich aliphatische Kohlenwasserstoffe, vorzugsweise mit 1 bis 10 C-Atomen, wie Pentane, Hexene und Heptane, Alkohole, aromatische Kohlenwasserstoffe, Ketone, Terpene, Äther, Ester, chlo-

- 5 -

rierte Kohlenwasserstoffe, Arylphosphate, Schwerbenzine u.dgl. einzeln oder in Mischung. Beispiele für Ketone sind Methyl-Äthylketone, Beispiele für Arylphosphate sind Trikresylphosphat, Beispiele für chlorierte Wasserstoffe sind Chloroform und für Alkohole Methyl- und Äthylalkohol.

Das Farbstoffvorprodukt kann in einer Menge von 2 bis 5 Gew.-%, bezogen auf die Lösung, in dem erfindungsgemäßen Schreibstift vorliegen.

Sowohl in dem Fall, wenn der Schreibstift eine Flüssigkeit mit der Reaktionskomponente enthält oder selbsttragend als Stift ausgebildet ist, wird man der Trägersubstanz zusätzlich Harnstoff oder dessen Derivate, wie Thioharnstoff, N-Phenylthioharnstoff, Diphenylthioharnstoff u.dgl. zugeben.

Weiters kann die Lösung bzw. die Trägersubstanz Reduktionsmittel auf Basis von Aminen, wie Mono-, Di- und Triaminen bzw. quatären Aminen, enthalten.

Üblicherweise wird man auch UV-Schutzmittel, Oxidationsschutzmittel, Korrosionsschutzmittel od.dgl. beigeben.

Als Alterungsschutzmittel eignen sich beispielsweise 2,4-Dihydroxybenzophenon (Uvinul), 2,2-Dihydroxy-4,4-dimethoxibenzophenon und 2-Hydroxy-4-methoxybenzophenon.

Geeignete Antioxydationsmittel sind besispielsweise Umsetzungsprodukte eines Säureamids und eines Alkohols auf Acetylenbasis (Sepacorr) oder Kohlenwasserstoffwachse. Zu den UV-Schutzmitteln zählen beispielsweise phenolische Antioxydantien, Octadecyl-3-(3,5-ditert.-butyl-4-hydroxyphenyl)-propionat.

Die erfindungsgemäße Lösung kann man als Flüssigkeit in einem Kugelschreiber, einer Füllfeder od.dgl. aber auch in einem Filzstift verwenden, bei letzterem wird man vorzugsweise einen Filter vor das Filzband schalten. In diesem Fall kann man als Aufnahmeblatt jedes beliebige im Handel befindliche Produkt verwenden, das aus einem Träger besteht, der mit einem Bindemittel oder Wachs und darin eingebettet einer sauren Komponente, wie Tone, organische Carbonsäure oder Metallchlorid beschichtet ist. Es eignen sich auch Beschichtungen aus sauren Phenolformaldehydharzen, allein oder gemeinsam mit einem Bindemittel.

Enthält der Schreibstift als Reaktionskomponente die saure Verbindung, so ist das Beschriftungsblatt mit dem Farbstoffvorprodukt in einem Bindemittel beschichtet, auf dem man je nach Verbindung verschiedene Farben erhält. Insbesondere gedacht ist dieses System für sogannte Malbilder, bei denen in bestimmten Farben Muster aufgedruckt sind und beim Beschriften mit dem die saure Komponente enthaltenden Stift erscheint das Muster je nach Farbstoffvorprodukt auf dem Aufnahmeblatt in verschiedenen Farben.

Die Farbbasen lassen sich beliebig untereinander austauschen in den nachfolgenden Rezepturen. Man verwendet beispielsweise neben Kristallviolettlakton auch Benzoylleukomethylenblau, Malachitgrünlakton, Rhodamin-ß-Laktam, Leukoauramin, Spiropyrane, Anthrachinonderivate u.dgl.

Soll die Erfindung als Stift Anwendung finden, so sind geeignete Bindemittel Wachse, wie Paraffinwachs, Ozokerit, Kohlenwasserstoffwachse, Hartwachs, Polyäthylenwachs, Amidwachse od.dgl.

Als Gerüstsubstanz eignen sich lineare Polyamide, lineare gesättigte Polyesterharze, Äthylen-Vinylacetat-Copolymere, ataktisches Polypropylen, Polystyrol, Styrol-Isopren-Blockpolymer (SIS).

Die Erfindung soll nun an Hand einiger Ausführungsbeispiele näher erläutert werden.

Beispiel 1:                    Im nachfolgenden wird die Herstellung von selbsttragenden Malstiften beschrieben.

Man stellt eine Schmelze von
Kohlenwasserstoffwachs (M.P. 65-90$^\circ$C,

| | |
|---|---|
| M.G. 580-700) | 96,3 Gew.-Teile |
| Zinkchlorid | 3,0 " " |
| Vaseline | 0,7 " " |

her. Man läßt die Mischung erstarren und im halbweichen Zustand formt man sie zu Malstiften geeigneter Größe. Dann läßt man die Stifte aushärten, bis sie die aufreichende Festigkeit besitzen.

Das Aufnahmeblatt besteht aus einem Papierträger mit einer, Kristallviolettlakton, eingebettet in ein Bindemittel, und Dithioharnstoff enthaltenden Schicht. Beim Beschriften des Blattes erhält man scharf gestochene blaue Kopien.

Beispiel 2: In einen Stift mit Kugelschreiberspitze wird eine Lösung folgender Zusammensetzung eingefüllt:

| | |
|---|---|
| Eisen-II-chlorid | 4 Gew.-Teile |
| Methanol | 58 Gew.-Teile |
| Wasser | 38 Gew.-Teile |

Als Aufnahmeblatt dient ein Papierträger, der mit einer Lösung von Malachitgrünlakton in Benzin und Äthylalkohol getränkt ist. Man erhält eine haltbare, scharf gestochene grüne Beschriftung mit dem erfindungsgemäßen Stift.

Beispiel 3: Ein Aufnahmeblatt wird in Form eines Musters mit folgender Masse bedruckt:

| | |
|---|---|
| Spiropyran | 2,0 Gew.-Teile |
| Harnstoff | 10,0 Gew.-Teile |
| Benzoylleukomethylenblau | 0,8 Gew.-Teile |
| Polyvinylalkohol | 5,0 Gew.-Teile |
| Wasser | 82,2 Gew.-Teile |

Nach Trocknen der Masse erhält man ein fabrloses Blatt; beim Übermalen mit einem Faserstift, der folgende Lösung enthält:

- 8 -

| | |
|---|---|
| Leukomethylenblau | 2,5 Gew.-Teile |
| Benzin | 15 Gew.-Teile |
| Äthylalkohol | 82,5 Gew.-Teile |

erscheint das Druckmuster in einem intensiven Blau.

Sämtliche Ausführungsbeispiele lassen sich insofern variieren, als man anstelle des Zinkchlorides auch Chloride von Vanadium, Chrom, Mangan, Eisen, Kobalt, Nickel oder Kupfer, jedoch auch saure phenolische Harze, Phenol-Formaldehydharze, saure Tone und organische Säuren verwenden kann.

Beispiel 4: Man stellt eine Lösung folgender Zusammensetzung her:

| | |
|---|---|
| Terpene | 90 Gew.-Teile |
| Kristallviolettlakton | 3 Gew.-Teile |
| Äthanol | 5 Gew.-Teile |
| Hexamethylenamin | 0,5 Gew.-Teile |

Die Lösung wurde als Flüssigkeit in einen Filzstift eingefüllt, der mit einem Filter gegen eventuelle feste Bestandteile ausgestattet ist.

Beispiel 5: Es wurde eine Lösung folgender Zusammensetzung hergestellt:

| | |
|---|---|
| Alkohol (Methyl-/Äthylalkohol 30:70) | 90 Gew.-Teile |
| Leichtbenzin | 5 Gew.-Teile |
| Malachitgrünlakton | 4 Gew.-Teile |
| Hexamethylenamin | 0,5 Gew.-Teile |

Die Lösung wurde als Flüssigkeit in einen Kugelschreiber eingefüllt.

Beim Beschriften eines Unterblattes mit dem Filzstift nach Beispiel 1 und 4 und dem Kugelschreiber nach Beispiel 2 und 5 erhielt man in erstem Fall eine tiefviolette und im zweiten Fall eine grellgrüne Schrift. Durch Variieren der Farbbase lassen sich

- 9 -

beliebige Farbnuancen gemäß der Erfindung herstellen.

Beispiel 6:          Man stellt eine Lösung folgender
Zusammensetzung her:
Aromatische Kohlenwasserstoffe          95,00 Gew.-Teile
Benzoylleukomethylenblau                 0,62 Gew.-Teile
Kristallviolettlakton                    1,80 Gew.-Teile
Uvinul                                   1,00 Gew.-Teile

Die Lösung wurde wie in Beispiel 1 verwendet.

Beispiel 7:          Man stellt eine Lösung folgender
Zusammensetzung her:
Methanol                                 5,00 Gew.-Teile
Methyläthylketon                        91,00 Gew.-Teile
2-Methyl-6-(N-äthyl-N-p-
toluylamino)-fluoran                     3,00 Gew.-Teile
Hexamethylentetramin                     1,00 Gew.-Teile

Die Lösung wurde wie in Beispiel 2 verwendet, doch erhält man
ein satt rotes Schriftbild, wenn man als Akzeptor einen sauren
Ton verwendet.

Beispiel 8:          Man stellt eine Lösung folgender
Zusammensetzung her:
Chloroform                              91,00 Gew.-Teile
Bindemittel                              1,00 Gew.-Teile
Toluol                                   5,00 Gew.-Teile
Spirodipyran der Fa.BASF                 3,00 Gew.-Teile

Die Lösung wurde als Füllfedertinte in eine Füllfeder eingefüllt oder in einer Füllfederpatrone verwendet.

Beim Beschriften eines Unterblattes mit einem Filzstift nach
Beispiel 6 bzw. einer Füllfedertinte nach Beispiel 8, erhielt man
eine blaue Schrift.

Durch Variieren der Farbbasen lassen sich beliebige Farbnuancen gemäß der Erfindung herstellen.

Patentansprüche:

1. Schreibstift auf Basis einer chemischen Farbreaktion zwischen einem Farbstoffvorprodukt und einer sauren Verbindung, die den Farbstoffakzeptor bildet,
dadurch gekennzeichnet,
daß der Schreibstift eine der Reaktionskomponenten in einer Trägersubstanz enthält, gegebenenfalls in Kombination mit üblichen Zusätzen.

2. Schreibstift nach Anspruch 1,
dadurch gekennzeichnet,
daß die Reaktionskomponente die saure Verbindung, d.h, der Farbstoffakzeptor ist.

3. Schreibstift nach Anspruch 2,
dadurch gekennzeichnet,
daß die saure Verbindung ein saurer Ton, ein Phenolharz, Phenolformaldehyd-Harz, Chlorid eines Metalles mit der Atommasse 50 bis 66 oder eine organische Säure einzeln oder in Mischung ist.

4. Schreibstift nach einem oder mehreren der Ansprüche 1 bis 3,
dadurch gekennzeichnet,
daß die Trägersubstanz aus einem Bindemittel, eingebettet in eine Gerüstsubstanz, besteht.

5. Schreibstift nach einem oder mehreren der Ansprüche 1 bis 3,
dadurch gekennzeichnet,
daß die Trägersubstanz ein Wachs ist.

6. Schreibstift nach einem oder mehreren der Ansprüche 1 bis 3,
dadurch gekennzeichnet,
daß die Trägersubstanz ein Lösungsmittel ist.

7. Schreibstift nach Anspruch 1,
dadurch gekennzeichnet,
daß die Reaktionskomponente ein Farbstoffvorprodukt ist.

8. Schreibstift nach Anspruch 7,
dadurch gekennzeichnet,
daß das Farbstoffvorprodukt ausgewählt ist aus der Gruppe
Kristallviolettlakton, Malachitgrünlakton, Benzoylleukomethylenblau, Rhodamin-ß-Lactam, Leukoauramin, Spiropyran,
Fluorane und Anthrachinonderivaten.

9. Schreibstift nach einem oder mehreren der Ansprüche 1 bis 3
und 7 und 8,
dadurch gekennzeichnet,
daß die Trägersubstanz ein Lösungsmittel ist.

10. Schreibstift nach Anspruch 9,
dadurch gekennzeichnet,
daß das Lösungsmittel ausgewählt ist aus der Gruppe Kohlenwasserstoffe, vorzugsweise 1 - 10 C-Atomen, Alkohole, aromatische Kohlenwasserstoffe, Ketone, Terpene, Äther, Ester,
chlorierte Kohlenwasserstoffe, Arylphosphate, Schwerbenzin
u.dgl. einzeln oder in Mischung.

11. Schreibstift nach einem oder mehreren der Ansprüche 1 und 7
bis 10,
dadurch gekennzeichnet, daß das Farbstoffvorprodukt in einer
Menge von 2 bis 5 Gew.-%, bezogen auf die Lösung vorliegt.

12. Schreibstift nach einem oder mehreren der Ansprüche 1 bis 11,
dadurch gekennzeichnet,
daß die Trägersubstanz zusätzlich Harnstoff oder dessen Derivate, wie Thioharnstoff, N-Phenylthioharnstoff, Diphenylthioharnstoff u.dgl. enthält.

13. Schreibstift nach einem oder mehreren der Ansprüche 1 bis 11,
dadurch gekennzeichnet,
daß die Trägersubstanz zusätzlich UV-Schutzmittel, Oxidationsschutzmittel, Korrosionsschutzmittel u.dgl. enthält.

14. Schreibstift nach einem oder mehreren der Ansprüche 1 bis 13,
dadurch gekennzeichnet,
daß die Trägersubstanz zusätzlich ein Reduktionsmittel auf

- 3 -

Basis von Aminen, wie Mono-, Di- und Triaminen bzw. quartären Aminen, enthält.

15. Schreibstift nach einem oder mehreren der Ansprüche 1 und 7 bis 14,
dadurch gekennzeichnet,
daß die Lösung der Reaktionskomponente als Flüssigkeit in einen Kugelschreiber, Filzstift oder Füllfeder eingefüllt ist.

16. Schreibstift nach Anspruch 13,
dadurch gekennzeichnet,
daß die Lösung der Reaktionskomponente als Flüssigkeit in einem Filzschreiber, unter Vorschaltung eines Filters vor das Filzband eingefüllt ist.

# 0017889

Europäisches
Patentamt

**EUROPÄISCHER RECHERCHENBERICHT**

Nummer der Anmeldung

EP 80101852.4

| EINSCHLÄGIGE DOKUMENTE | | | KLASSIFIKATION DER ANMELDUNG (Int.Cl 3) |
|---|---|---|---|
| Kategorie | Kennzeichnung des Dokuments mit Angabe, soweit erforderlich, der maßgeblichen Teile | betrifft Anspruch | |
| X | <u>DE - A - 2 008 957</u> (GÜNTHER WAGNER PELIKAN-WERKE) <br><br> + Gesamt + <br><br> -- | 1-3,6-10,15 | C 09 D 11/16 <br> C 09 D 13/00 |
| X | <u>DE - B - 2 250 145</u> (PILOT-MAN-NEN-HITSU K.K.) <br><br> + Gesamt + <br><br> -- | 1-10,15 | |
| X | <u>GB - A - 729 242</u> (THE NATIONAL CASH REGISTER COMPANY) <br><br> + Gesamt + <br><br> ---- | 1-3,6-10,15 | **RECHERCHIERTE SACHGEBIETE (Int. Cl. 3)** <br><br> C 09 D |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| | Der vorliegende Recherchenbericht wurde für alle Patentansprüche erstellt | | |
|---|---|---|---|
| Recherchenort | Abschlußdatum der Recherche | Prüfer | |
| WIEN | 12-06-1980 | PAMMINGER | |

EPA form 1503.1  06.78